# EUROPEAN PATENT APPLICATION

(11) **EP 2 305 166 A1**
(43) Date of publication of application: **06.04.2011**
(21) Application number: 10183573.4
(22) Date of filing: 30.09.2010
(51) Int. Cl.: A61C 15/04

(54) **Flossing tool**

(30) Priority: 30.09.2009 US 247525 P
(71) Applicant: Ranir LLC, Grand Rapids, MI 49512 (US)
(72) Inventor: Crossmann, Scott P., Rockford, MI 49341 (US)
(74) Representative: Lewin, David Nicholas

(57) **Abstract**

A flossing tool comprising includes a handle having a first end, a second end opposite said first end, and a longitudinal length defining a line extending through the first end and the second end. A head is attached to the handle, the head includes a pair of arms supporting a strand of dental floss. The arms extend at a first angle with respect to the line. A hinge is positioned between the head and the handle. The hinge enables the head to pivot with respect to the line, forming a second angle between the head and the line, the second angle being different from the first angle. The first angle may be fixed to orient the floss into a use position, and the second angle may vary as the head is flexed about the hinge. The hinge enables the head and arms to flex as the user moves the floss between different sets of teeth.

## Description

### BACKGROUND OF THE INVENTION

The present invention generally relates to dental flossing tools.

Flossing tools and holders are well known for aiding consumers in flossing in between the teeth. These devices generally include a handle and a head portion that supports a strand of dental floss. For example, the head may include a pair of spaced apart arms extending from the handle with a strand of dental floss stretched between the arms. The dental floss is held in tension between the arms, so that a user can grip the handle to insert the floss between the user's teeth.

Some flossing tools include a head that is angled, or that can pivot to an angled position, with respect to the handle, in order to put the head in a use position in which the user can insert the head portion of the flossing tool into the mouth. However, once in the mouth, it can be difficult to maneuver the tool to insert the floss between the teeth. A user typically must change the grip on the tool and adjust the positioning of the tool with respect to the mouth until the strand of floss is able to access the desired area between the user's teeth.

### SUMMARY OF THE INVENTION

The present invention provides a flossing tool having an articulated head.

In one embodiment, the flossing tool includes a handle and a head adapted to support a strand of floss. The head includes a pair of arms that support the floss and are positioned at a first angle with respect to the handle which orients the head and floss into a use position. The head is connected to the handle by a hinge that allows the head to pivot to a second angle with respect to the handle that is different from the first angle. In one embodiment, the handle defines a longitudinal length that extends through the first and second ends of the handle. The head, floss, handle, and the first angle all lie in a common plane that extends along the longitudinal length, and the second angle extends out of the common plane. In a more particular embodiment, the first angle orients the arms at an angle with respect to a first plane extending along the longitudinal length of the handle, and the second angle orients the head and floss at an angle with respect to a second plane extending along the longitudinal length of the handle, wherein the second plane is generally parallel to the lateral sides of the handle.

Optionally, the angle between the arms and the longitudinal length of the handle can be fixed, while the hinge allows the arms, and thus the head and floss, to freely pivot, such that the second angle can be varied as desired by the user. Alternatively, the first angle between the arms and the longitudinal length of the handle can vary, while the angle between the head and the lateral sides of the handle can be variable. In another embodiment, the tool may include a second hinge, such that both angles can be varied.

Optionally, the hinge can be a line of weakening in the material between the head and handle. For example, the line of weakening could be a living hinge, a perforation, a line of reduced thickness in the material or a fold line.

In another embodiment, the handle may include a second hinge that allows the head to pivot with respect to the handle in the same plane as the handle and head. The second hinge could also be a line of weakening, such as a line of reduced thickness in the material or a fold line.

The flossing tool described herein provides advantages in functionality. The angled tool combined with the hinged head allows the user not only easier entry of the tool into the mouth, but also easier access to the area between each of the user's teeth as the angle of the arms with respect to handle can vary freely. Thus, a user can access top and bottom, front and back teeth without having to significantly adjust the position of the tool with respect to the mouth. Further, the handle, head and hinge therebetween can be integrally formed, such that the increased functionality does not substantially increase manufacturing time.

These and other objects, advantages, and features of the invention will be readily understood and appreciated by reference to the description of the current embodiments and the drawings.

### BRIEF DESCRIPTION OF THE DRAWINGS

Fig. 1 is an upper perspective view of a flossing tool according to one embodiment of the present invention;

Fig. 2 is a side perspective view of the flossing tool;

Fig. 3 is a perspective view of the flossing tool, illustrating the pivotal movement of the head;

Fig. 4 is a top plan view of the flossing tool; and

Fig. 5 is a perspective view of the flossing tool, shown in use.

### DETAILED DESCRIPTION OF THE CURRENT EMBODIMENT

### I. Overview

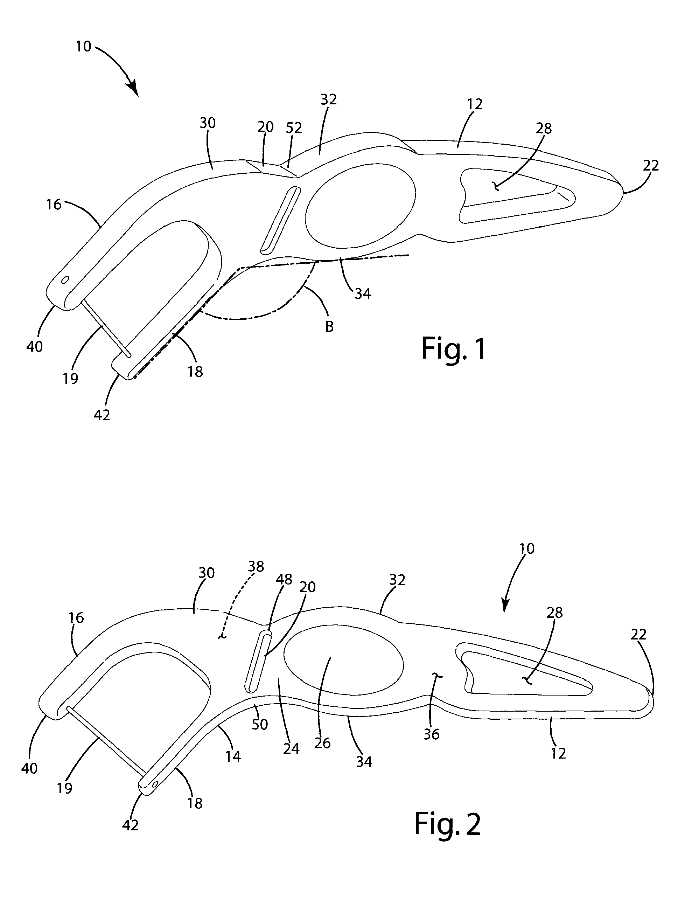

A dental flossing tool according to one embodiment of the present invention is shown in Fig. 1 and is designated 10. In general, the flossing tool 10 includes a handle 12 and a head 14 including a pair of arms 16 and 18 holding a length of dental floss 19. In the illustrated embodiment, the head 14 and arms are positioned at an angle with respect to the longitudinal length of the handle and with respect to a bottom edge 34 of the handle 12, and the head 14 is connected to the handle 14 by a hinge 20 that allows the head 14 to pivot freely with respect to the lateral side surfaces 36 and 38 of the handle 12.

While this embodiment is described with respect to "top and bottom" and "side" edges and surfaces, it should be understood that these designations could be reversed, i.e., the handle could be formed at an angle with respect to the side surfaces, with the hinge being positioned to allow the head 14 to pivot with respect to the top and/or bottom edge of the handle 14.

### II. Structure

The flossing tool 10 is typically formed from an injection molded plastic. In the embodiment shown in Figs. 1-5, the flossing tool is integrally formed from a single, unitary piece of molded thermoplastic.

The handle 12 is generally flat and includes a free first end 22 and a second end 24 adjacent the hinge 20. The handle 12 defines a longitudinal length extending between the first 22 and second 24 ends. The handle 12 further includes a top edge 32, a bottom edge 34 opposite the top edge 32, and side surfaces 36 and 38. In the illustrated embodiment, the handle 12 is elongated and includes an indented gripper portion 26 adjacent the second end 24, which can be readily grabbed and supported between the thumb and fingers of a user. In the illustrated embodiment, the handle 12 tapers from the gripper portion 26 to the first end 22 and includes a cutout 28 that may be used for gripping the flosser 10 and may also reduce material cost and weight. Alternatively, the handle 12 may have a variety of different shapes, and may have a different length.

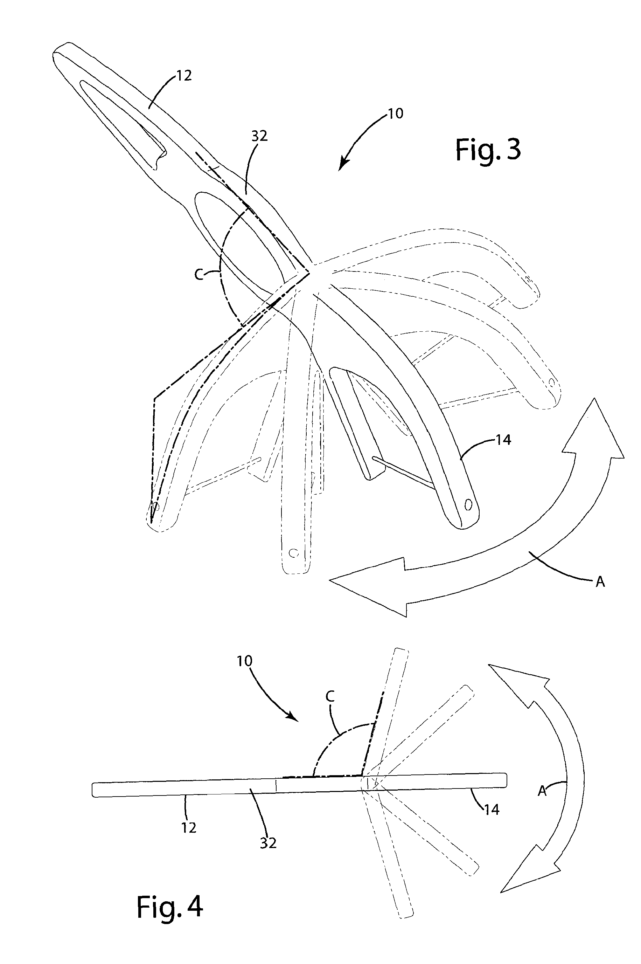

The head 14 can be formed in any shape suitable to support at least one strand of floss. In the illustrated embodiment, the head 14 is generally flat and includes a base portion 30 adjacent the hinge 20, with the spaced apart arms 16 and 18 extending from the base portion 30. As shown, the base portion 30 is asymmetrical and is curved or angled with respect to the handle 12, such that the arms 16, 18 extend from the base portion 30 at an angle B with respect to the longitudinal length of the handle 14 and with respect to the bottom edge 34 of the handle 12 which, in the illustrated embodiment, extends generally parallel to the longitudinal length (Fig. 1). However, as shown in Fig. 4, the head 14, including the arms 16, 18 and the base portion 30, otherwise remains in the same plane as the handle 12 when the hinge 20 is in an un-flexed position. The angle B at which the arms 16, 18 extend with respect to the handle 12 may assist a user in inserting the head 12 into the mouth. As shown, the angle B is about 120 degrees, however, this angle may vary from application. For instance, in one alternative embodiment, the angle B may be about 90 degrees.

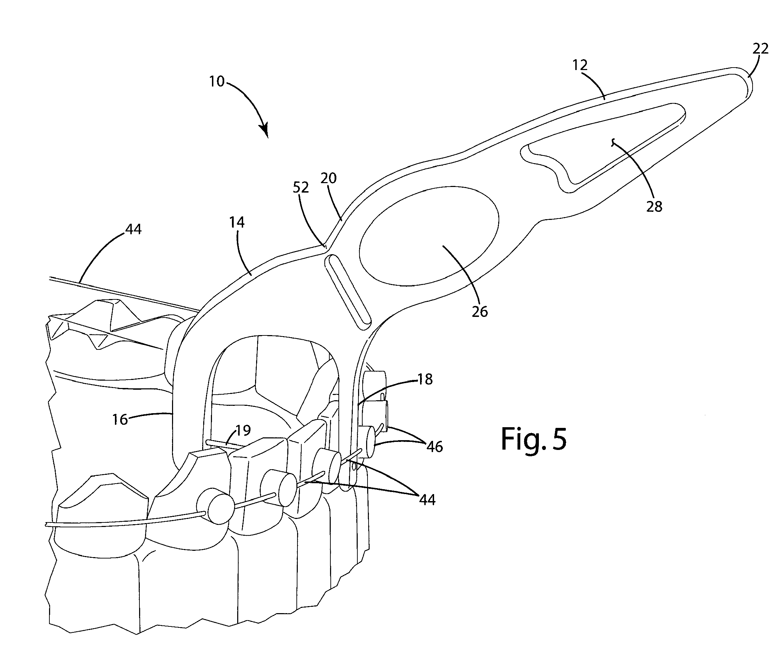

The arms 16, 18 are generally parallel to each other and form a U-shape at the end of the head 14. As shown in Fig. 5, the arms 16, 18 can be spaced far enough apart so that the arms are positioned on opposite sides of a user's teeth when the tool 10 is inserted between a user's teeth. The arms 16, 18 respectively terminate in a tip 40, 42, which may be rounded to prevent injury to the user's mouth.

The arms 16, 18 can be selectively sized depending on the desired application of the tool 10. For example, the arms 16, 18 can be sized to accommodate a user who has braces or other dental appliances. As shown in Fig. 5, the thickness of the arm 18 can be sized to fit under a wire 44 that connects the braces 46 on the user's teeth. In such an embodiment, the arm 16 can be larger or wider than the arm 18, which may increase the strength and/or durability of the arm 16. Alternatively, the arms 16, 18 can be the same size, and in other applications, the arm 18 can be larger than the arm 16.

The strand of floss 19 is attached to each of the arms 16, 18 near the tips 40 and 42, such that the floss 19 is stretched across the span between the arms and held in tension. The floss 19 may be attached to the arms by a variety of methods. In one embodiment, the floss 19 is molded in place into the arms 16, 18 such that the floss extends straight through both of the arms, with the excess floss extending out the reverse side of each arm. The excess floss may be trimmed to a desired length. The floss 19 may be comprised of a variety of suitable materials, such as nylon or similar material, or UHMWPE, or PTFE, for example.

The hinge 20 can be formed in any suitable configuration that allows movement between the handle 12 and head 14. In the illustrated embodiment, the hinge 20 is formed across the body of the tool 10 and allows the head 14 to move out of the plane formed by the handle 12 and the un-flexed head 14 to vary the angle C between the head 14 and the side surfaces 36, 38 of the handle 12 (Figs. 3 and 4). The hinge 20 may be a line of weakening, such as a living hinge, in the material between the head 14 and handle 12 that allows the head 14 to flex freely with respect to the line defined by longitudinal length of the handle 12. The line of weakening may be a perforation, a fold line or an area of reduced thickness in the material.

The hinge 20 can be selectively arranged to provide a desirable range of motion of the head 12 in the mouth of a user. In the illustrated embodiment, wherein the handle 12, head 14 and hinge 20 are all molded from a single, unitary piece of thermoplastic, the hinge 20 is formed by a line of weakening in the flossing tool 10 positioned between the head 14 and the handle 12. As shown, the line of weakening is formed by an elongated indentation formed in each side of the flossing tool 10 at the junction between the handle 12 and head 14, extending substantially from the upper edge 32 to the lower edge 34 of the handle 12. The hinge 20 may be angled with respect to the handle 12. For instance, as shown, an upper end 48 of the hinge 20 is positioned closer to the free end 22 of the handle 12, while the lower end 50 of the hinge 20 is closer to the head 14. As a result, in the illustrated embodiment the hinge 20 is angled with respect to the arms 16, 18. In another embodiment, the hinge 20 may be parallel to the arms 16, 18 Optionally, the tool 10 can include a neck portion 52 of reduced width between the handle 12 and head 14. The hinge 20 can be positioned at the neck portion and as shown, the hinge 20 extends across substantially all of the neck portion 52.

### III. Manufacture

The manufacture of the flossing tool shown in Figs. 1-5 can be performed in a single step. In this embodiment, a mold (not shown) includes a cavity having the general shape of the flossing tool. A strand of floss 19 is stretched through the mold such that it extends through the cavity at the location of the ends of the arms 16, 18. A thermoplastic is injected into the mold about the floss 19, such that the floss is molded in place in the arms 16, 18.

Depending on the type of hinge 20 used, the hinge 20 can be formed using a trim line, die cut, or other process generally know in the art.

The formed flossing tool 10 can then be removed from the mold, and the excess floss trimmed from the outside edges of the arms 16, 18.

### IV. Use

Once formed, the tool 10 is ready to be used for flossing a user's teeth. The user can grasp the handle 12 and insert the head 14 into the mouth. Because the head 14 and floss 19 are angled with respect to the handle 12, the user can hold the tool 10 generally in front of the mouth, perpendicular to the face, as opposed to angling the tool 10 against the user's face or lips.

After the tool 10 is inserted into the mouth, the user can selectively position the head 14 in the area between two teeth that user would like to floss. In order to position the floss strand 19 directly between the teeth and obtain leverage on the handle 12 to press the floss between the teeth, the user can move the handle 12 with respect to the head 14, which varies the angle C between the head 14 and the side surfaces 36, 38 of the tool 10. As shown in Figs. 3 and 4, the hinge 20 allows the head 14 to pivot toward and away from both sides 36 and 38 of the handle 12, as designated by the arrows A.

In the illustrated embodiment, the angle B between the head 14 and the bottom edge 34 of the handle 12 remains fixed. However, in other embodiments, the tool 10 may include an additional hinge that allows the head 14 to move in two directions, or rotate in a variety of directions.

The above description is that of the current embodiments of the invention. Various alterations and changes can be made without departing from the spirit and broader aspects of the invention as defined in the appended claims, which are to be interpreted in accordance with the principles of patent law including the doctrine of equivalents. Any reference to claim elements in the singular, for example, using the articles "a," "an," "the" or "said," is not to be construed as limiting the element to the singular.

The present disclosure extends to the following statements:
A1. A flossing tool comprising:
   a handle including a first end, a second end opposite said first end, and a longitudinal length defining a line extending through said first end and said second end;
   a head attached to said handle, said head including a pair of arms supporting a strand of floss, said arms extending at a first angle with respect to said line; and
   a hinge positioned between said head and said handle, said hinge enabling said head to pivot with respect to said line, forming a second angle between said head and said line, said second angle being different from said first angle.
A2. The flossing tool of statement A1 wherein said first angle is permanently fixed.
A3. The flossing tool of statement A2 wherein said hinge enables said head to flex freely in two directions with respect to said handle.
A4. The flossing tool of statement A3 wherein said hinge enables said head to flex within a range of about 180 degrees.
A5. The flossing tool of statement A4 wherein said arms are generally parallel to each other.
A6. The flossing tool of statement A4 wherein said hinge is a line of weakening in the flossing tool.
A7. The flossing tool of statement A6 wherein said head, said hinge and said handle are formed from a single piece of thermoplastic.
A8. The flossing tool of statement A7 wherein said first angle is approximately 120 degrees.
A9. The flossing tool of statement A1 wherein said handle includes a bottom edge, a top edge, a first lateral side surface and a second lateral side surface, said bottom edge being generally parallel to said line, such that said first angle is formed between said bottom edge and said arms as well as between said line and said arms.
A10. The flossing tool of statement A9 wherein said second angle is formed between said head and said first and second lateral side surfaces.
A11. A flossing tool comprising:
   a handle including first and second longitudinal ends, an upper edge, a lower edge, a first lateral side surface and a second lateral side surface;
   a head extending from said second longitudinal end, said head including a pair of spaced apart arms capable of supporting a strand of dental floss in tension, at least one of said arms defining a first angle with respect to said lower edge of said handle; and
   a hinge between said head and said handle, said hinge including a line of weakening enabling said head and said arms to be pivoted with respect to said handle to form a second angle between said head and said handle different from said first angle, wherein said second angle is defined with respect to a plane defined by one of said first and second lateral side edges.
A12. The flossing tool of statement A11 wherein said first angle is permanently fixed.
A13. The flossing tool of statement A11 wherein said first angle is approximately 120 degrees.
A14. The flossing tool of statement A11 wherein said head, said handle and said hinge are formed from a single, unitary piece of material.
A15. The flossing tool of statement A11 wherein said hinge allows said head to flex in a first direction toward said first lateral surface and in a second direction toward said second lateral surface.
A16. The flossing tool of statement A15 wherein said hinge enables said head to flex from an unflexed position in which said second angle is approximately zero to an angle of about 90 degrees in said first direction, and to an angle of about 90 degrees in said second direction, such that said hinge enables a total range of flexibility of about 180 degrees.
A17. The flossing tool of statement A11 wherein said line of weakening includes an indentation defined in at least one of said first and second lateral side edges.
A18. A flossing tool comprising:
   a handle having a first longitudinal end and a second longitudinal end and defining a longitudinal length extending from said first longitudinal end through said second longitudinal end, said handle defining a plane extending along said longitudinal length through said first and second longitudinal ends;
   a head extending from said handle, said head including a base adjacent said handle and a pair of spaced apart arms extending from said base at a first fixed angle that lies within said first plane;
   a strand of dental floss extending between said arms; and
   a hinge positioned between said base of said head and said handle, wherein said hinge enables said head to flex back and forth with respect to said plane.
A19. The flossing tool of statement A18 wherein said head can be moved about said hinge in two directions between a unflexed position in which said head, said arms and said strand of dental floss lie in said plane, and a flexed position in which said head, said arms and said strand of floss lie at an angle with respect to said plane.
A20. The flossing tool of statement A19 wherein said head, said handle and said hinge are formed from a single, unitary piece of material, and wherein said hinge is a line of weakening including an indentation in said material.

## Claims

1. A flossing tool comprising:
a handle including a first end, a second end opposite said first end, and a longitudinal length defining a line extending through said first end and said second end;
a head attached to said handle, said head including a pair of arms supporting a strand of floss, said arms extending at a first angle with respect to said line; and
a hinge positioned between said head and said handle, said hinge enabling said head to pivot with respect to said line, forming a second angle between said head and said line, said second angle being different from said first angle.

2. The flossing tool of claim 1 wherein said first angle is permanently fixed.

3. The flossing tool of claim 1 or 2 wherein said hinge enables said head to flex freely in a first direction and a second direction with respect to said handle.

4. The flossing tool of claim 3 wherein said handle includes an upper edge, a lower edge, a first lateral side surface and a second lateral side surface, said first direction being toward said first lateral surface and said second direction being toward said second lateral surface.

5. The flossing tool of any of the preceding claims wherein said hinge enables said head to flex within a range of about 180 degrees.

6. The flossing tool of any of the preceding claims wherein said hinge enables said head to flex freely in a first direction and a second direction with respect to said handle, and wherein said hinge enables said head to flex from an unflexed position in which said second angle is approximately zero to an angle of about 90 degrees in said first direction, and to an angle of about 90 degrees in said second direction.

7. The flossing tool of any of the preceding claims wherein said head can be moved about said hinge between an unflexed position in which said head, said arms and said floss lie in a plane defined by said handle, and a flexed position in which said head, said arms and said floss lie at an angle with respect to said plane.

8. The flossing tool of any of the preceding claims wherein said arms are generally parallel to each other.

9. The flossing tool of any of the preceding claims wherein said hinge is a line of weakening in the flossing tool.

10. The flossing tool of claim 9 wherein said line of weakening includes an indentation defined in at least one of said first and second lateral side surfaces.

11. The flossing tool of any of the preceding claims wherein said head, said handle and said hinge are formed from a single, unitary piece of material.

12. The flossing tool of any of the preceding claims wherein said head, said hinge and said handle are formed from a single piece of thermoplastic.

13. The flossing tool of any of the preceding claims wherein said first angle is approximately 120 degrees.

14. The flossing tool of any of the preceding claims wherein said handle includes a bottom edge, a top edge, a first lateral side surface and a second lateral side surface, said bottom edge being generally parallel to said line, such that said first angle is formed between said bottom edge and said arms as well as between said line and said arms.

15. The flossing tool of claim 14 wherein said second angle is formed between said head and said first and second lateral side surfaces.
